# EUROPEAN PATENT APPLICATION

(11) **EP 4 671 686 A1**
(43) Date of publication of application: **31.12.2025**
(21) Application number: 24185337.3
(22) Date of filing: 28.06.2024
(51) Int. Cl.: G01C 21/10, B62H 5/20, B62J 50/20, G07C 5/00, G01C 22/00

(54) **BICYCLE ACTIVITY MONITORING SYSTEM**

(71) Applicant: FB Innovation srls, 70033 Corato (IT)
(72) Inventor: Capogna, Angelo Domenico, 70033 Corato (IT)
(74) Representative: Fiume, Orazio

(57) **Abstract**

Activity monitoring system of a bicycle comprising at least a remote server (SV) and a first pedal (P1) in which a processing unit (CPU) is installed, an accelerometer (IN) capable of generating a first signal representative of a state of displacement of the pedal, localization means (GPS, WIFI), wherein the processing unit is configured to acquire said first signal and a value of displacement of the bicycle calculated by means of the localization means and send the first signal and the displacement value to the remote server, and wherein the remote server is configured to high-pass filter a relative frequency content, and to analyze highfrequency vibrations to recognize a sliding of the bicycle on a respective support surface and validate a value of displacement of the bicycle when said sliding of the bicycle on said respective support surface is recognized.

## Description

### Field of the invention

The present invention relates to a system for monitoring the activity of a bicycle.

### State of the art

In recent times, the use of low environmental impact vehicles has been increasingly encouraged.

The most popular vehicles are bicycles, including those with pedal assistance.

All these vehicles have in common the fact that they are very light with a maximum weight established by law of 50 kg and a maximum length less than 3 meters and the fact that they are equipped with pedals to allow at least partially the propulsion of the vehicle.

These vehicles are rarely equipped with on-board electronic devices. Sometimes, a bicycle can be equipped with an odometer to measure its speed starting from the rotation speed of a wheel. There are essentially three types of odometers on the market. A first variant involves the installation of a sensor on a fork and a magnet on a spoke of the wheel and the number of revolutions and circumference of the wheel is obtained by counting the pulses generated by the reciprocal displacement between the magnet and the sensor. Other odometers include a transmitter equipped with a gyroscope to be mounted directly on the wheel hub. A processing unit generally equipped with a display is designed to interface with the sensor via an electric cable or wirelessly and calculate the speed of the velocipede based on the number of revolutions and circumference of the wheel. Another type of odometer is based on GPS.

Many systems have been developed to monitor the quality of physical activity while riding a bicycle, but often these functions are not necessary when the bicycle is used as a means of transport rather than as a sports device.

In a means of transport, especially when expensive, as in the case of a pedal-assisted bicycle, mileage takes on significant information, especially in the sale of used bicycles. This aspect is relevant in the field of pedal-assisted bicycles, in which the relative battery, as known, has a limited number of recharge cycles. Therefore, a high mileage indicates a high state of wear of the batteries or mechanical components.

### Summary of the invention

The purpose of the present invention is to present a modular system for monitoring a bicycle that allows its use to be monitored in a simple and effective manner.

The system which is the subject of the present invention includes at least one remote server that can be operationally connected to the Internet, a first pedal in which a processing unit is installed, an accelerometer capable of generating a first signal representing a state of displacement of the pedal, localization means, first infrastructure-type wireless communication means, in which the processing unit is configured to acquire said first signal and a value of the bicycle displacement determined on the basis of said localization means, send said first signal and said displacement value to said remote server, in which the remote server is configured to receive said first signal and said value of the bicycle displacement, high-pass filter a relative frequency content of the first signal, analyze high-frequency vibrations to recognize a sliding of the bicycle on a respective support surface and validate said value of the bicycle displacement when said sliding of the bicycle on said respective support surface is recognized.

Advantageously, when the bicycle is transported on another vehicle, the vibration field has a lower frequency that primarily depends on the natural frequency of the suspensions of the other vehicle. Therefore, there is no risk that a displacement of the bicycle on another vehicle is mistaken for a journey of the same bicycle.

According to a preferred aspect of the invention, the analysis is carried out on a moving window partitioned into sub-intervals. Thus, said recognition is performed when said vibration analysis returns a positive result in a predetermined number of sub-intervals.

Advantageously, this method allows to recognize an actual use of the bicycle independently of possible variables depending on the roughness and consistency of the support surface.

Preferably, the pedal comprises first means of wireless communication of an infrastructure type, i.e. of the GSM type and similar and the processing unit, by means of said first means of wireless communication, is configured to send to a remote server, the value of the displacement travelled by the bicycle. Thus, the remote server is able to certify the mileage travelled by a bicycle equipped with the aforementioned pedal and the related periods of use.

Preferably, the pedal comprises second wireless point-to-point communication means, such as Bluetooth, ANT+, etc. and the processing unit is configured to connect and interface, via the second wireless communication means, with a smartphone in order to provide an App, previously installed on the smartphone, with information about the partial and total mileage of the bicycle and usage statistics, such as average speed, routes, etc. on a weekly, monthly, etc. basis. Advantageously, the certification of the distance travelled by the bicycle is very useful for the purpose of knowing the actual state of wear of the bicycle.

According to a further preferred aspect of the invention, in parallel with said recognition of the sliding of the bicycle on the respective support surface, an analysis of the roughness of the support surface associated with the location of the same is carried out.

This information can also be made available to the remote server and/or to the App installed on the smartphone of the bicycle user.

The dependent claims describe preferred variants of the invention, forming an integral part of the present specification.

### Brief description of the figures

Further purposes and advantages of the present invention will be made clear by the detailed description that follows of an example of its embodiment (and its variants) and by the attached drawings given purely for explanatory and non-limiting purposes, in which:
Figure 1 shows an example of a pedal according to the present invention;
Figure 2 shows a system comprising the pedal of Figure 1 and a remote server;

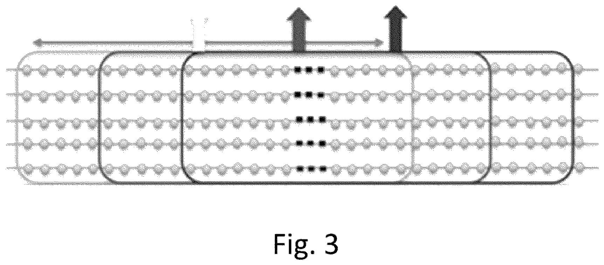

Figure 3 shows an additional pedal in addition to the pedal of Figure 1;
Figure 4 shows an example of a mobile window.

The same numbers and reference letters in the figures identify the same elements or components or functions.

In the context of the present description, the term "second" component does not imply the presence of a "first" component. Such terms are in fact used as labels to improve clarity and are not to be understood in a limitative manner.

The elements and features illustrated in the various preferred embodiments, including the drawings, can be combined with each other without departing from the scope of protection of the present application as described below.

### Detailed description

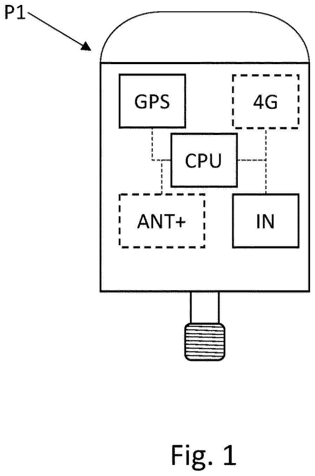

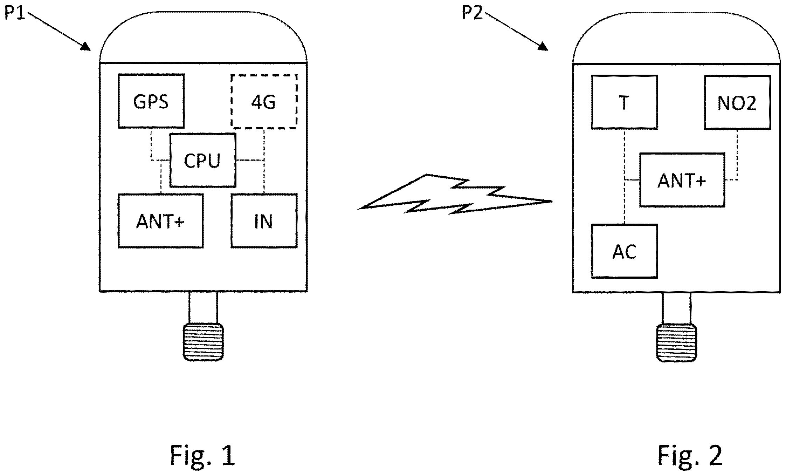

With reference to figure 1, a bicycle activity monitoring system is shown comprising at least a first pedal P1 in which a CPU processing unit is installed, an accelerometer IN capable of generating a first signal representing a state of displacement of the pedal, GPS localization means, in which the processing unit is configured to acquire the first signal and high-pass filter a relative frequency content, analyze high-frequency vibrations to recognize a sliding of the bicycle on a respective support surface and validate a value of the bicycle displacement determined on the basis of said GPS localization means when the sliding of the bicycle on the respective support surface is recognized.

In other words, when the frequency content indicates that the bicycle, with its wheels, moves on a support surface, only then is the bicycle displacement obtained by the localization means validated, otherwise, such displacement is discarded.

The localization means preferably comprise a GPS receiver and preferably further comprise to the GPS receiver also a WIFI interface to improve the localization of the bicycle. It makes sense to discard such a displacement when, for example, the bicycle is transported by another means of transport, such as a car or a train.

The CPU processing unit is configured to analyze the high-frequency vibrations by means of a moving window partitioned into sub-intervals, so as to validate the value of the bicycle displacement when, for at least a predetermined number of sub-intervals of said moving window, it recognizes said sliding of the bicycle on the respective support surface.

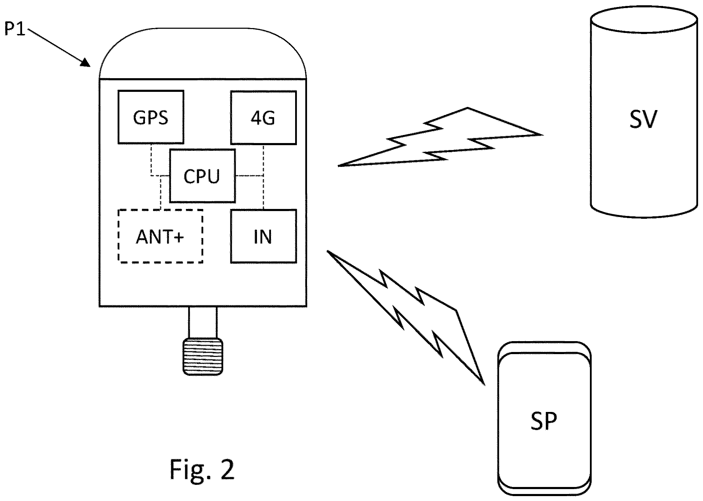

With reference to figure 2, the system preferably also comprising a remote server SV and the first pedal P1 comprises first wireless communication means of the 4G, 5g and similar infrastructure type and the processing unit is configured to send to the remote server, a value of the bicycle displacement in an operating session, by means of the first wireless communication means.

According to a preferred aspect of the invention, the remote server SV is configured to acquire the displacement value and add it to an overall mileage value associated with the bicycle.

Advantageously, a unique and certain mileage value is associated with the bicycle.

According to a preferred aspect of the invention, the first pedal P1 further comprises second wireless communication means, of the point-to-point type, i.e. of the Bluetooth or ANT+, zigbee, etc. type, operationally connected to the processing unit. Furthermore, the system comprises a second pedal P2 equipped with at least one of the following additional sensors:
- temperature (T),
- N02;
- acoustic (AC),
and equipped with third wireless communication means, of the point-to-point type, i.e. compatible with the second wireless communication means, to communicate with the second wireless communication means and transmit to the processing unit CPU a second signal representative of a measurement made by at least one of the additional sensors.

Thanks to this variant of the invention, it is also possible to perform environmental monitoring.

In this case, the processing unit is configured to forward the second signal, i.e. the signal received from one of the additional sensors, to the said remote server SV together with information about a GPS position generating the second signal. Advantageously, it is possible to know the exact position of the measurement taken with one of the additional sensors.

Preferably, the processing unit is configured to send, via the first means of wireless communication, a request for help in response to a detection of an intensity of the first signal exceeding a first predetermined threshold, as in the event of a collision or accident.

According to a preferred aspect of the invention, the first pedal comprises second wireless communication means of the WIFI, Bluetooth, ANT+ and similar type, to connect the processing unit with a smartphone SP equipped with a specific APP. The processing unit is configured to send, by means of said first wireless communication means, a possible theft signal in response to a failure to connect the second wireless communication means in the presence of a bicycle displacement value.

In other words, when set to alarm mode, if the processing unit detects that the bicycle is moving while the smartphone is disconnected, then this situation is interpreted as a bicycle theft situation.

This signal can be sent to a closed list of telephone numbers, for example to the owner, but can also be sent to the remote server for possible future analysis and reporting to the police.

Preferably, the processing unit is configured to connect and interface, via the second wireless communication means, with a smartphone in order to provide an App, previously installed on the smartphone, with information about a partial and total displacement value of the bicycle and statistics on the use of the bicycle.

For example, the low frequency content can still be used to examine the pedalling cadence to relate it to the speed and the displacement value of the bicycle during a session of use.

The invention also relates to a method of monitoring the activity of a bicycle by means of a system comprising at least one remote server SV, a first pedal P1 in which a processing unit CPU is installed, an accelerometer IN capable of generating a first signal representing a state of displacement of the pedal, GPS localization means, WIFI, first wireless communication means of the 4G infrastructure type.

The method comprises
+ a first phase of
. acquiring said first signal and a displacement value of the bicycle determined on the basis of said localization means (GPS, WIFI),
. sending said first signal and said displacement value to said remote server,
by means of said processing unit,
+ a second phase of
. receiving said first signal and said bicycle displacement value,
. high-pass filtering a relative frequency content of the first signal,
. analysing high-frequency vibrations to recognize a sliding of the bicycle on a respective support surface, and
. validating a bicycle displacement value when said sliding of the bicycle on said respective support surface is recognized, by means of said remote server.

Preferably, the first pedal comprises second wireless communication means of the WIFI, Bluetooth, ANT+ type and similar, to connect the processing unit with a smartphone equipped with a specific APP. The method comprises a step of sending, by means of said first wireless communication means, a notification of possible theft in response to a lack of connection of the second wireless communication means in the presence of a value of displacement of the bicycle.

The analysis of high frequency vibrations preferably comprises the use of a moving window partitioned into sub-intervals, so as to validate said value of displacement of the bicycle when for at least a predetermined number of sub-intervals of said moving window it recognises said sliding of the bicycle on said respective support surface.

The present invention can be advantageously implemented by means of a computer program that comprises coding means for the implementation of one or more steps of the method, when this program is executed on a computer. It is therefore intended that the scope of protection extends to said computer program and also to computer-readable media comprising a recorded message, said computer-readable media comprising program coding means for the implementation of one or more steps of the method, when said program is executed on a computer.

Implementation variants to the non-limiting example described are possible, without however departing from the scope of protection of the present invention, including all the embodiments equivalent for a technician in the field, to the content of the claims.

From the description given above, the technician in the field is able to realize the object of the invention without introducing further construction details.

## Claims

1. Activity monitoring system of a bicycle comprising at least
+ a remote server (SV) operably connectable to the Internet,
+ a first pedal (P1) in which is installed
- a processing unit (CPU),
- an accelerometer (IN) capable of generating a first signal representative of a state of displacement of the pedal,
- localization means (GPS, WIFI),
- first means of wireless communication of the infrastructure type (4G),
wherein the processing unit is configured
. acquire said first signal and a value of displacement of the bicycle determined on the basis of said localization means (GPS, WIFI),
. send said first signal and said displacement value to said remote server,
wherein the remote server is configured to
. receive said first signal and said value of displacement of the bicycle,
. high-pass filter a relative frequency content of the first signal,
. analyse high-frequency vibrations to recognize a sliding of the bicycle on a respective support surface and
. validating said value of the bicycle displacement when said sliding of the bicycle on said respective support surface is recognized.

2. System according to claim 1, wherein the remote server is configured to analyse said high frequency vibrations by means of a first moving window partitioned into sub-intervals, so as to validate said value of the bicycle displacement when for at least a predetermined number of sub-intervals of said moving window it recognizes said sliding of the bicycle on said respective support surface.

3. System according to claim 1 or 2, wherein the processing unit is configured to send said first signal and said displacement value by means of a second observation window, of equal or different width from the first observation window.

4. System according to any of claims 1 - 3, wherein said remote server is configured to acquire said displacement value and to add it to an overall displacement value associated with said bicycle.

5. System according to any of claims 1 - 4, wherein the first pedal (P1) further comprises second wireless communication means, of a point-to-point type operatively connected with said processing unit, and wherein the system comprises a second pedal (P2) equipped with at least one of the following additional sensors:
- temperature (T),
- NO2;
- acoustic (AC),
and equipped with third wireless communication means, of a point-to-point type, to communicate with said second wireless communication means and transmit to said processing unit (CPU) a second signal representative of a measurement made by said at least one of the additional sensors.

6. System according to claim 5, wherein said processing unit is configured to forward said second signal to said remote server (SV) together with information about a GPS position of generation of said second signal.

7. System according to any of the preceding claims 1 - 6, wherein the processing unit is configured to send, by means of said first wireless communication means, a distress request in response to a detection of an intensity of said first signal exceeding a first predetermined threshold.

8. System according to any of the preceding claims 5 - 7, wherein the processing unit is configured to connect and interface, by means of the second wireless communication means, with a smartphone (SP) so as to provide an App, previously installed on the smartphone, with information about a partial and total displacement value of the bicycle and statistics on the use of the bicycle.

9. System according to claim 8, wherein the processing unit is configured to send, by means of said first wireless communication means, a report of possible theft in response to an acquisition of a displacement value of the bicycle while said second wireless communication means are disconnected from said smartphone.

10. Method of monitoring the activity of a bicycle comprising at least
+ a remote server (SV),
+ a first pedal (P1) in which is installed
- a processing unit (CPU),
- an accelerometer (IN) capable of generating a first signal representative of a state of displacement of the pedal,
- localization means (GPS, WIFI),
- first means of wireless communication of an infrastructure type (4G),
the method comprising
+ a first phase of
. acquiring said first signal and a value of displacement of the bicycle determined on the basis of said localization means (GPS, WIFI),
. sending said first signal and said displacement value to said remote server,
by means of said processing unit,
+ a second phase of
. receiving said first signal and said value of displacement of the bicycle,
. high-pass filtering a relative frequency content of the first signal,
. analysing high-frequency vibrations to recognize a sliding of the bicycle on a respective support surface and
. validating a value of the bicycle displacement when said sliding of the bicycle on said respective support surface is recognized, by said remote server.

11. A method according to claim 10, further comprising a step of sending, by said first wireless communication means, a report of possible theft in response to an acquisition of a value of the bicycle displacement while said second wireless communication means are disconnected from said smartphone.

12. A method according to claim 10 or 11, wherein said step of analysing the high frequency vibrations comprises the use of a moving window partitioned into sub-intervals, so as to validate said value of the bicycle displacement when for at least a predetermined number of sub-intervals of said moving window it recognizes said sliding of the bicycle on said respective support surface.

13. A method according to one of the preceding claims 10 - 12, further comprising a step of sending, by said first wireless communication means, a distress call in response to a detection of an intensity of said first signal exceeding a first predetermined threshold.

14. A computer program comprising instructions for causing the processing unit (CPU) and the remote server of claim 1 to implement the method of claim 10.

15. A computer-readable medium having stored the program of claim 14.
